# EUROPÄISCHE PATENTSCHRIFT

(11) **EP 2 110 877 B1**
(45) Veröffentlichungstag und Bekanntmachung des Hinweises auf die Patenterteilung: **29.06.2011**
(21) Anmeldenummer: 09004879.4
(22) Anmeldetag: 02.04.2009
(51) Int. Cl.: H01M 8/04, H01M 8/24

(54) **Brennstoffzellensystem, insbesondere zum Einsatz an Bord eines Verkehrsflugzeuges oder Kraftfahzeugs**
Fuel cell system, in particular for use on board a commercial airplane or motor vehicle
Système de pile à combustible, notamment pour l'utilisation à bord d'un avion ou d'un véhicule automobile

(30) Priorität: 15.04.2008 DE 102008018779
(43) Veröffentlichungstag der Anmeldung: 21.10.2009
(73) Patentinhaber: Diehl Aerospace GmbH, 88662 Überlingen (DE)
(72) Erfinder: Knepple, Ronny, 88662 Überlingen (DE); Blumenstein, Dieter, 88690 Uhldingen-MÜhlhofen (DE); Speth, Bernd, 88662 Überlingen (DE)
(74) Vertreter: Kummer, Ralf

(56) Entgegenhaltungen:
- EP-A- 1 231 660
- WO-A-2004/079269
- DE-A1- 10 104 503
- US-A- 5 401 589
- US-A1- 2003 054 210
- US-A1- 2007 281 201

## Beschreibung

Die Erfindung betrifft ein Brennstoffzellensystem gemäß dem Oberbegriff des Hauptanspruches.

Energieversorgungseinheiten mit Brennstoffzellen zum Einsatz in Verkehrsflugzeugen sind etwa in der DE 10 2005 054 883 A1 beschrieben. Die dienen dort zum Nachladen von Strom- und Wasserspeichern in verfahrbaren Getränkeautomaten für Einsatz in der Kabine. Im Zuge des Nachladens des elektrischen Akkumulators im Getränkeautomaten wird auch das in der Brennstoffzelle als Reaktionsprodukt angefallene heiße Wasser zum Auflösen bzw. Aufbrühen von Getränken umgefüllt. Mehrere solcher Energieversorgungseinheiten können in verschiedenen Bereichen des Flugzeugs, insbesondere bei den vorderen und hinteren Bordküchen und im Mittenbereich der Passagierkabine, installiert sein, um dort im Verlaufe der Bewirtung der Passagiere zum Nachladen der Gertränkeautomaten angefahren zu werden.

In der DE 10 2006 002 470 A1 sind verschiedene Aspekte beschrieben, welche die Verwendung von Reaktionsprodukten aus dem Betrieb von mit Brennstoffzellen betriebenen Elektrolyseeinrichtungen an Bord von Verkehrsflugzeigen interessant erscheinen lassen. Dazu zählt der Einsatz des anfallenden Wassers als Brauchauch als Nutzwasser, um den Startvorgang nicht durch mitgeführte Wasservorräte zu belasten, oder das Beimischen erhöhten Sauerstoffgehaltes in die Kabinenluft, um im Flugbetrieb mit geringerem Innendruck auszukommen und dadurch die aus der Differenz zum Umgebungsdruck in der Flughöhe resultierende Strukturbeanspruchung der Flugzeugzelle zu mindern.

Andererseits birgt der Betrieb eines Brennstoffzellensystemes gerade in einem in sich abgeschlossenen System wie einer Flugzeugzelle ein erhöhtes Gefährdungspotential, da aus der Zelle oder ihren Armaturen austretender Wasserstoff einerseits schwer zu detektieren ist und andererseits mit der Umgebungsluft Knallgas bildet; weshalb das System bei Auftreten von Leckagen sofort abschalten muß. Zu diesem problematischen Sicherheitsaspekt kommt der nachteilige betriebwirtschaftliche Aspekt hinzu, dass im Interesse günstigen Wirkungsgrades eine Brennstoffzelle mit möglichst geringer Leistungsmodulation betrieben werden sollte, weshalb die an Bord eines Luftfahrzeuges in den unterschiedlichen Flugphasen zwangsläufig auftretenden (und außerhalb der Passagierkabine, etwa im Frachtraum, gewöhnlich gar nicht regelungstechnisch abgefangenen) Druck- und Temperaturschwankungen sich auf das Betriebsverhalten der Brennstoffzelle negativ auswirken.

Aus den Dokumenten US 2003/054210 A1, US 2007/281201 A1, WO 2004/079269 A, US 5,401,589 A, EP 1 231 660 A und DE 101 04 503 A1 sind Brennstoffzellensysteme bekannt, bei welchen Leckagewasserstoff katalytisch verwertet werden kann.

In Erkenntnis obiger Gegebenheiten liegt vorliegender Erfindung die technische Problemstellung zugrunde, die Akzeptanz und Einsatzbreite gattungsgemäßer Brennstoffzellensysteme durch Maßnahmen zur Förderung der Betriebssicherheit und -wirtschaftlichkeit zu steigern.

Diese Aufgabe wird erfindungsgemäß durch die im Hauptanspruch angegebenen wesentlichen Merkmale erfüllt. Danach ist die Brennstoffzelle von einem druckdichten Umgehäuse umgeben, das im übrigen mit Luft gefüllt ist, die relativ zum Reaktionsraum der Brennstoffzelle unter Überdruck steht und vorzugsweise der Brennstoffzelle selbst als eines ihrer beiden Betriebs- oder Eduktgase zugeführt wird.

Im Falle einer an der Brennstoffzelle bzw. davor, an der Einspeisearmatur oder am Wasserstoff Generator bzw. -Tank, auftretenden Leckage wirkt der Überdruck des umgebenden Luftkissens dem Austritt von Wasserstoff entgegen. Vor allem aber kann das - infolge des Gegendruckes ohnehin entsprechend verringerte - Austrittsvolumen nun nicht die Umwelt an Bord des Flugzeuges belasten, sondern es verbleibt im Umgehäuse eingeschlossen.

Die Wasserstoff-Leckmenge geht der Zelle nicht verloren, wenn der in das Luftkissen ausgetretene Wasserstoff zusammen mit Luft aus dem Kissen der Zelle als ihr zweites Eduktgas zugeführt wird, wobei der Wasserstoff hierbei katalytisch mit dem Luftsauerstoff unter Wärmeabgabe zu Wasser reagiert. Auch die beim Betrieb der Brennstoffzelle auftretende und aus ihr in das umgebende Luftkissen abgegebene Reaktionswärme verbleibt im System, indem die Betriebsluft aus dem so von der Zelle selbst aufgeheizten Luftkissen entnommen wird.

Größere Leckagemengen dagegen würden sich im oberen Bereich des Umgehäuses ansammeln, wo sie leichter detektiert und von wo sie gezielt abgezogen und dem System getrennt von der Betriebsluft zugeführt werden.

Das Luftkissen liefert auch eine gewisse Entkopplung des Zellenbetriebes von störenden Umwelteinflüssen wie im Flugbetrieb auftretenden starken Temperatur- oder kurzzeitigen Druckschwankungen, wenn die Brennstoffzelle im nicht klimatisierten Frachtraum des Flugzeuges arbeitet. Andererseits sind Undichtigkeiten leichter aufzuspüren, wenn zu Wartungsarbeiten das Luftkissen der Zellenumgebung aus dem Umgehäuse abgelassen wird.

Da die zwischen den Armaturen und sonstigen anlagentechnischen Komponenten konstruktiv bedingten Zwischenräume für das Volumen des Luftkissens zur Verfügung stehen, braucht das Umgehäuse kein wesentlich über den Einbauraumbedarf des Brennstoffzellensystemes insgesamt hinausgehendes Volumen aufzuweisen, um gleichzeitig einen Kompressor-Vordruckbehälter darzustellen. Außerdem sind, wegen ihrer Anordnung im Überdruck des Luftkissens innerhalb des hermetisch dichten Umgehäuses, keine doppelwandigen Leitungsrohre für den Wasserstoff mehr erforderlich, was den Raumbedarf für das Gesamtsystem zusätzlich reduziert. Das dadurch vergleichsweise kleine Volumen des Luftkissens lässt andererseits im Interesse optimierter Betriebsparameter eine Umgebungsdruck- und -temperatur-regelung der Brennstoffzelle recht unproblematisch realisieren.

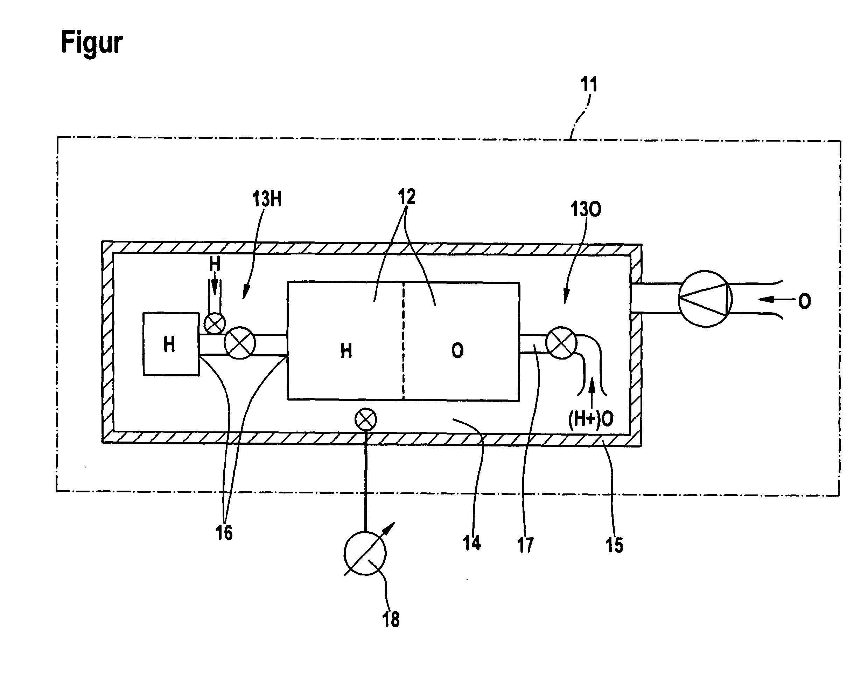

Das erfindungsgemäß ausgelegte Brennstoffzellensystem ist anhand der Zeichnung näher veranschaulicht. Deren einzige Figur zeigt auf das Funktionswesentliche abstrahiert und nicht maßstabsgerecht stark verkleinert den Einbau der Zelle und ihrer Betriebsarmaturen in ein Umgehäuse.

Gemäß der Erfindung wird also eine insbesondere für Einsatz an Bord eines Verkehrsflugzeuges 11 bestimmte System aus Brennstoffzelle 12 und ihren Eduktarmaturen 13H, 130 im Luftkissen 14 im Innern eines druckdichten Umgehäuses 15 betrieben. Dadurch kann der für den Betrieb der Zelle 12 im Umgehäuse 15 gespeicherte oder generierte und aus etwaigen Leckagen 16 austretende Wasserstoff H nicht an der Umwelt zu Knallgas führen, sondern er verbleibt im Luftkissen 14 des Umgehäuses 15 eingeschlossen, ohne Betriebsunterbrechungen hervorzurufen.

Auch diese Leckmengen gelangen dann sogar noch mit aus dem Lassen 14 entnommener Betriebsluft (H+)O=17 in die Brennstoffzelle 12. Das Luftkissen 14 wird im Umgehäuse 15 durch die Abwärme des Zellenbetriebes selbst reaktionsfreudig aufgeheizt und kann zusätzlich einer Druck- oder Temperatur-Regelung 18 unterworfen werden.

## Patentansprüche

1. Brennstoffzellensystem, insbesondere zum Einsatz an Bord eines Verkehrsflugzeuges (11) oder Kraftfahrzeugs, mit einer an einen Speicher oder Gasgenerator und an Armaturen (13H, 130) für seine beiden Eduktgase Wasserstoff (H) und Sauerstoff (O; nämlich Luft) angeschlossenen Brennstoffzelle (12), und mit einem druckdichten und gegen Umweiteinflüsse resistenten Umgehäuse (15), in weichem Umgehäuse (15) das System aus Brennstoffzelle (12) und Armaturen (13H, 130) unter einem relativ zum Reaktionsraum der Brennstoffzelle (12) unter Überdruck stehenden Luftkissen (14) betreibbar angeordnet ist,
**dadurch gekennzeichnet, dass** das Brennstoffzellensystem derart ausgebildet ist, dass
im oberen Bereich des Umgehäuses (15) sich ansammelnder Leckage-Wasserstoff (H) über die Armatur (13H) für das Eduktgas Wasserstoff der Brennstoffzelle (12) zugeführt wird.

2. Brennstoffzellensystem nach dem vorangehenden Anspruch,
**dadurch gekennzeichnet, dass** das Brennstoffzellensystem derart ausgebildet ist,
dass seine Brennstoffzelle (12) aus dem Luftkissen (14) mit ihrem zweiten Eduktgas (O) gespeist wird, vorzugsweise zusammen mit in das Luftkissen (14) ausgetretenem Leckage-Wasserstoff (H).

3. Brennstoffzellensystem nach einem der vorangehenden Ansprüche,
**dadurch gekennzeichnet,**
**dass** eine Druck- und / oder Temperatur-Regelung (18) für das Luftkissen (14) vorgesehen ist.

## Claims

1. Fuel cell system, in particular for use on board a commercial aircraft (11) or motor vehicle, having a fuel cell (12) which is connected to a reservoir or gas generator and to fittings (13H, 130) for its two raw-material gases hydrogen (H) and oxygen (O; specifically air), and having a pressure-tight enclosure (15), which is resistant to environmental influences and in which the system comprising the fuel cell (12) and the fittings (13H, 130) is arranged such that it can be operated under an air cushion (14) which is at a higher pressure than the reaction area of the fuel cell (12), **characterized in that** the fuel cell system is designed such that
leakage hydrogen (H) which gathers in the upper area of the enclosure (15) is supplied to the fuel cell (12) via the fitting (13H) for the raw-material hydrogen gas.

2. Fuel cell system according to the preceding claim, **characterized in that** the fuel cell system is designed such
that its fuel cell (12) is fed with its second raw-material gas (O) from the air cushion (14), preferably together with leakage hydrogen (H) which emerges into the air cushion (14).

3. Fuel cell system according to one of the preceding claims,
**characterized**
**in that** pressure and/or temperature regulation (18) is provided for the air cushion (14).

## Revendications

1. Système de pile à combustible, notamment pour être utilisé à bord d'un avion de ligne (11) ou d'un véhicule automobile, comprenant une pile à combustible (12) raccordée à un accumulateur ou à un générateur de gaz et à des vannes (13H, 130) pour ses deux gaz réactifs hydrogène (H) et oxygène (O ; à savoir de l'air), et comprenant un boîtier enveloppant (15) hermétique à la pression et résistant aux influences de l'environnement, boîtier enveloppant (15) dans lequel le système composé de la pile à combustible (12) et des vannes (13H, 130) est disposé à l'état fonctionnel sous un coussin d'air (14) qui est en surpression par rapport à la chambre de réaction de la pile à combustible (12),
**caractérisé en ce que** le système de pile à combustible est configuré de telle sorte que
l'hydrogène de fuite (H) qui s'accumule dans la zone supérieure du boîtier enveloppant (15) soit acheminé à la pile à combustible (12) par le biais de la vanne (13H) pour le gaz réactif hydrogène.

2. Système de pile à combustible selon la revendication précédente, **caractérisé en ce que** le système de pile à combustible est configuré de telle sorte
que sa pile à combustible (12) soit alimentée en deuxième gaz réactif (0) depuis le coussin d'air (14), de préférence conjointement avec l'hydrogène de fuite (H) qui s'échappe dans le coussin d'air (14).

3. Système de pile à combustible selon l'une des revendications précédentes, **caractérisé en ce qu'**il est prévu une régulation de la pression et/ou de la température (18) pour le coussin d'air (14).
